# EUROPÄISCHE PATENTSCHRIFT

(11) **EP 4 194 165 B1**
(45) Veröffentlichungstag und Bekanntmachung des Hinweises auf die Patenterteilung: **03.09.2025**
(21) Anmeldenummer: 22208490.7
(22) Anmeldetag: 21.11.2022
(51) Int. Cl.: B27M 1/08, B23Q 1/48, B23Q 1/62, B27C 5/02

(54) **WERKZEUGMASCHINE ZUR BEARBEITUNG EINES WERKSTÜCKS AUS HOLZ**
MACHINE TOOL FOR MACHINING A WORKPIECE MADE OF WOOD
MACHINE-OUTIL POUR L'USINAGE D'UNE PIÈCE EN BOIS

(30) Priorität: 08.12.2021 DE 102021132339
(43) Veröffentlichungstag der Anmeldung: 14.06.2023
(73) Patentinhaber: Disto Holding GmbH, 78655 Dunningen (DE)
(72) Erfinder: Fehrenbach, Manuel, 78141 Schönwald (DE)
(74) Vertreter: Westphal, Mussgnug & Partner Patentanwälte mbB

(56) Entgegenhaltungen:
- DE-A1- 102015 115 618
- DE-C1- 19 733 457

## Beschreibung

Die Erfindung betrifft eine Werkzeugmaschine zur Bearbeitung eines Werkstücks aus Holz gemäß dem Oberbegriff des Anspruchs 1.

Werkzeugmaschinen, wie beispielsweise Tischfräsen, zur Bearbeitung von Werkstücken aus Holz werden üblicherweise in Schreinereien und anderen Werkstätten eingesetzt, um einzelne Werkstücke oder Kleinserien zu fertigen. Dabei werden häufig Schablonen und Vorrichtungen zur Hilfe genommen, um die gewünschten Konturen präzise und wiederholgenau an einem Werkstück anbringen zu können. Hierbei ist ein hohes Maß an Handarbeit erforderlich. Das Fertigen von Einzelstücken oder Kleinserien ist dementsprechend zeitintensiv und teuer.

Eine dafür eingesetzte herkömmliche Werkzeugmaschine ist beispielsweise in der EP 1 136 206 A2 beschrieben.

Zur automatisierten Fertigung von Werkstücken aus Holz steht hingegen eine Vielzahl computergesteuerter Bearbeitungszentren zur Verfügung. Derartige Bearbeitungszentren sind jedoch teuer in Anschaffung und Unterhalt. Ein wirtschaftlicher Einsatz ist daher nur in der Großserienfertigung möglich. Bei der Bearbeitung mit einem marktüblichen Bearbeitungszentrum wird das Werkstück auf einem Tisch befestigt und von oben mit dem Werkzeug bearbeitet. Konstruktiv bedingt ist die Maschine dabei immer deutlich größer als das zu bearbeitende Werkstück. Daher weisen solche Bearbeitungszentren einen hohen Platzbedarf auf. Für den Einsatz in Schreinereien und vergleichbaren Werkstätten sind sie somit oft nicht geeignet.

Als weiterer Stand der Technik werden die DE 10 2015 115 618 A1 sowie die DE 197 33 457 C1 genannt.

Der Erfindung liegt daher die Aufgabe zugrunde, eine Werkzeugmaschine bereitzustellen, mit der ein Werkstück aus Holz automatisiert bearbeitet werden kann, und die gleichzeitig einen geringen Platzbedarf sowie geringe Anschaffungs- und Betriebskosten aufweist.

Die Aufgabe wird erfindungsgemäß gelöst durch eine Werkzeugmaschine mit den Merkmalen des Patentanspruchs 1.

Vorteilhafte Ausgestaltungen und Weiterbildungen der Erfindung sind in den abhängigen Ansprüchen angegeben.

Eine erfindungsgemäße Werkzeugmaschine zur Bearbeitung eines Werkstücks aus Holz, weist einen Maschinentisch zur Auflage des Werkstücks und eine Werkzeugaufnahme zur Aufnahme eines Werkzeugs auf, wobei die Werkzeugaufnahme an einer unter dem Maschinentisch angeordneten Verstellvorrichtung gelagert ist und der Maschinentisch eine Arbeitsöffnung zur Durchführung des Werkzeugs aufweist. Dabei ist die Werkzeugaufnahme mittels der Verstellvorrichtung relativ zum Maschinentisch entlang einer horizontal verlaufenden ersten Achse, entlang einer vertikal verlaufenden zweiten Achse und entlang einer senkrecht zur ersten Achse und zweiten Achse verlaufenden dritten Achse translatorisch bewegbar sowie um die erste Achse rotatorisch bewegbar.

Die Begriffe "horizontal" und "vertikal" beziehen sich vorzugsweise auf die zum bestimmungsgemäßen Gebrauch auf einer horizontalen Ebene aufgestellte Werkzeugmaschine. Damit ergeben sich vorzugsweise grundsätzlich vier Freiheitsgrade, nämlich drei translatorische und ein rotatorischer, hinsichtlich derer eine Bewegung der Werkzeugaufnahme zugelassen werden kann. Der Maschinentisch kann eine Tischplatte mit einer Vorderseite, einer Rückseite, einer linken Seite und einer rechten Seite aufweisen, wobei die Tischplatte vorzugsweise derart auf einem Gestell der Werkzeugmaschine gelagert ist, dass die Vorderseite und die Rückseite parallel zu der ersten Achse ausgerichtet sind, und die rechte Seite und die linke Seite parallel zu der dritten Achse ausgerichtet sind.

Die Werkzeugmaschine ist zur Bearbeitung von Werkstücken aus Holz und vorzugsweise zur Bearbeitung von Werkstücken aus Werkstoffen mit ähnlichen physikalischen Eigenschaften wie Holz geeignet. Vorzugsweise können mit der Werkzeugmaschine damit auch Werkstücke aus Kunststoff oder Aluminium bearbeitet werden.

Die Werkzeugaufnahme kann eine Werkzeuglängsachse aufweisen, entlang derer vorzugsweise das Werkzeug in der Werkzeugaufnahme angeordnet ist. Die Werkzeuglängsachse kann mit der zweiten Achse einen Werkzeugwinkel einschließen. Die Werkzeugaufnahme ist vorzugsweise derart an der Verstellvorrichtung gelagert, dass der Werkzeugwinkel in einem Bereich von -60° bis +95° einstellbar ist. Der Werkzeugwinkel beträgt vorzugsweise 0°, wenn die Werkzeuglängsachse derart entlang der zweiten Achse ausgerichtet ist, dass das von der Werkzeugaufnahme aufgenommene oder aufzunehmende Werkzeug nach oben ausgerichtet ist. Von der linken Seite aus gesehen, kann der Werkzeugwinkel vorzugsweise durch Schwenken der Werkzeugaufnahme im Uhrzeigersinn vergrößert und durch Schwenken gegen den Uhrzeigersinn entsprechend verkleinert werden. Durch die Anordnung der Verstellvorrichtung unter dem Maschinentisch kann die Werkzeugmaschine einen tiefsitzenden Schwerpunkt aufweisen. Dadurch können dynamische Bewegungsabläufe der Verstellvorrichtung ermöglicht werden.

Die Verstellvorrichtung weist vorzugsweise einen gegenüber dem Maschinentisch entlang der ersten Achse verschiebbaren Träger auf, an dem eine Traverse entlang der zweiten Achse verschiebbar angeordnet ist, wobei an der Traverse ein Schlitten entlang der dritten Achse verschiebbar angeordnet ist, und an dem Schlitten die Werkzeugaufnahme um die erste Achse drehbar angeordnet ist. Damit kann die Werkzeugaufnahme mittels des Trägers entsprechend der Benennung der Seiten der Tischplatte von links nach rechts, mittels der Traverse von unten nach oben und mittels des Schlittens von vorne nach hinten sowie entsprechend entgegengesetzt relativ zum Maschinentisch bewegt werden.

Der Träger ist vorzugsweise an dem Gestell gelagert. Der Träger, die Traverse und der Schlitten können elektromotorisch mittels Gewindetrieben angetrieben sein. Alternativ können Antriebe wie zum Beispiel Zahnstangen-, Riemen-, Ketten-, Direktantriebe eingesetzt werden. Das Schwenken der Werkzeugaufnahme erfolgt vorzugsweise durch ein spielfrei einstellbares Getriebe, kann alternativ aber beispielweise mithilfe eines Direktantriebs und einer Brems- bzw. Klemmeinrichtung ersetzt werden. Dieser Aufbau der Verstellvorrichtung, insbesondere die Anordnung der Werkzeugaufnahme, ermöglicht es, den zur Verfügung stehenden Raum weitestgehend für Verfahrwege entlang der ersten bis dritten Achse zu nutzen.

In einer bevorzugten Ausführungsform der Erfindung umfasst die Werkzeugaufnahme eine angetriebene Spindel, insbesondere zur Aufnahme eines Fräswerkzeugs. Die Werkzeuglängsachse stimmt vorzugsweise mit der Rotationsachse der Spindel überein.

Bevorzugt ist die Verstellvorrichtung während eines Bearbeitungsvorgangs mit einer Steuerungseinheit bewegbar. Besonders bevorzugt ist die Steuerungseinheit als CNC-Steuerungseinheit ausgebildet. Damit kann eine simultane mehrachsige Bewegung der Werkzeugaufnahme realisiert werden. Insbesondere kann damit die Bewegung der Werkzeugaufnahme entlang einer vorherbestimmten Trajektorie mit laufender Spindel ermöglicht werden. Damit kann die Bearbeitung derart erfolgen, dass das Werkstück fixiert ist und das Werkzeug die Bearbeitung ausführt. Alternativ kann das Werkzeug in einer bestimmten Positionierung gehalten werden, sodass das Werkstück gegenüber dem Werkzeug bewegt werden kann - ähnlich wie bei herkömmlichen Tischfräsen.

Die Werkzeugmaschine kann derart ausgebildet sein, dass die Arbeitsöffnung mittels mindestens einer verschiebbaren Schiebelamelle oder klappbaren Klapplamelle zumindest teilweise verschließbar ist. Damit kann die Arbeitsöffnung und somit auch die für das Werkstück zur Verfügung stehende Auflagefläche an das Werkstück und den Bearbeitungsvorgang angepasst werden. Außerdem kann so die Arbeitsöffnung an die Trajektorie der Werkzeugaufnahme bzw. des Werkzeugs angepasst werden.

Der Maschinentisch kann insbesondere an seiner Oberseite Schiebenuten aufweisen, in denen mehrere der Schiebelamellen einzeln verschiebbar und festklemmbar angeordnet sind. Die Schiebelamellen können vorzugsweise pneumatisch oder hydraulisch geklemmt und gelöst werden. Die Schiebenuten können als T-Nuten nach DIN 650 ausgebildet sein. Das Entnehmen einer oder mehrerer Schiebelamellen hat keinen Einfluss auf die Klemmung der übrigen Lamellen. Darüber hinaus kann der Maschinentisch insbesondere an der Oberseite Klappnuten aufweisen, in die die mindestens eine Klapplamelle eingeklappt werden kann.

Die Klapplamellen werden vorzugsweise um eine in der Tischplatte angeordnete Klappachse geklappt, die vorzugsweise neben zumindest einem Teil der Arbeitsöffnung angeordnet ist. Die Klappnuten können an der Oberseite des Maschinentischs senkrecht zur Klappachse verlaufen. Vorzugsweise sind die Schiebenuten parallel zu der dritten Achse angeordnet. Die Klappnuten können parallel zu der ersten Achse angeordnet sein. Insbesondere in den Schiebenuten können mechanische und/oder pneumatische Spannmittel zur Fixierung des Werkstücks angeordnet sein.

Erfindungsgemäß weist der Maschinentisch ein erstes Tischelement mit einer ersten Arbeitsöffnung und ein zweites Tischelement mit einer zweiten Arbeitsöffnung auf, wobei das zweite Tischelement derart an dem ersten Tischelement angeordnet ist, dass die erste Arbeitsöffnung und die zweite Arbeitsöffnung derart aneinander angrenzen, dass sie eine durchgehende Öffnung bilden. Dabei ist vorzugsweise die erste Arbeitsöffnung mithilfe der Schiebelamellen zumindest teilweise verschließbar. Die zweite Arbeitsöffnung kann mithilfe der Klapplamellen zumindest teilweise verschließbar sein. Darüber hinaus kann der Maschinentisch Aufnahmebohrungen zur Anordnung von mechanischen und/oder pneumatischen Spannmitteln aufweisen, wie sie beispielsweise von Schweißtischen bekannt sind. Vorzugsweise sind die Aufnahmebohrungen in dem ersten Tischelement angeordnet.

Das zweite Tischelement kann derart um eine parallel zur oder entlang der ersten Achse verlaufenden ersten Schwenkachse schwenkbar an dem ersten Tischelement angeordnet ist, dass es mit dem ersten Tischelement einen Tischwinkel einschließt. Vorzugsweise kann der Tischwinkel dabei stufenlos eingestellt werden.

Bevorzugt liegt der Tischwinkel im Bereich von 90° bis 180°. Bei einem Tischwinkel von 180° liegen das erste Tischelement und das zweite Tischelement vorzugsweise in derselben Ebene. So kann der Maschinentisch eine große ebene Auflagefläche für das Werkstück bieten. Bei einem Tischwinkel von kleiner als 180°, insbesondere bei einem Tischwinkel von 90°, kann das zweite Tischelement als Anschlag fungieren, der parallel zu der ersten Achse angeordnet ist.

Das zweite Tischelement kann eine Einlaufbacke und eine Auslaufbacke aufweisen, die entlang der oder parallel zur ersten Achse verschiebbar angeordnet sind. Vorzugsweise ist die zweite Arbeitsöffnung zwischen der Einlaufbacke und der Auslaufbacke angeordnet. Außerdem können die zum zumindest teilweisen Verschließen der zweiten Arbeitsöffnung vorgesehenen Lamellen an der Einlaufbacke und/oder der Auslaufbacke angeordnet sein. Damit kann je nach Tischwinkel die Größe der Auflagefläche oder des Anschlag durch Verschieben der Einlaufbacke und der Auslaufbacke verändert werden. Insbesondere kann die Größe der Arbeitsöffnung durch Verschieben der Einlaufbacke und der Auslaufbacke verändert werden.

In einer Weiterbildung der Erfindung weist der Maschinentisch ein drittes Tischelement auf, das um die erste Achse oder um eine parallel hierzu verlaufende zweite Schwenkachse schwenkbar an dem zweiten Tischelement angeordnet ist, wobei das dritte Tischelement stets parallel zu dem ersten Tischelement ausgerichtet ist. Beträgt der Tischwinkel 180°, kann das dritte Tischelement die Auflagefläche für das Werkstück zusätzlich vergrößern. Ist der Tischwinkel kleiner als 180° eingestellt, kann das dritte Tischelement hinsichtlich des darunterliegenden Maschinenteils als Schutzeinrichtung fungieren und außerdem als Ablagefläche dienen. Das dritte Tischelement kann mittels eines Hebelmechanismus parallel zu dem ersten Tischelement gehalten werden.

Vorzugsweise weist die Werkzeugmaschine eine an das dritte Tischelement angrenzende Abdeckung auf, die mittels einer Abdeckmechanik um die erste Achse oder um eine parallel hierzu verlaufende dritte Schwenkachse in Abhängigkeit des Tischwinkels schwenkbar ist. Damit kann die Verkürzung des Maschinentischs bezüglich der dritten Achse, die auftritt, wenn der Tischwinkel kleiner als 180° ist, kompensiert werden. Insbesondere kann die Abdeckung als Schutzvorrichtung hinsichtlich des unterhalb des Maschinentischs angeordneten Maschinenteils fungieren. Die Abdeckmechanik kann mit dem Hebelmechanismus gekoppelt sein. Insbesondere kann die Abdeckmechanik einen Ausleger des Hebelmechanismus umfassen.

Die Werkzeugmaschine kann einen an dem Maschinentisch anordenbaren Queranschlag aufweisen, der entlang der oder parallel zur ersten Achse und entlang der oder parallel zur dritten Achse manuell und/oder maschinengesteuert verschiebbar und fixierbar ist. Das maschinengesteuerte Verschieben und Fixieren erfolgt vorzugsweise mittels der Steuerungseinheit der Werkzeugmaschine. Der Queranschlag kann mittels eines Riemenantriebs angetrieben werden. Der Queranschlag kann bevorzugt von einer der Seiten der Tischplatte her, insbesondere von der Vorderseite her, angeordnet werden. Außerdem kann der Queranschlag ein Anschlaglineal aufweisen, das entlang der oder parallel zu der dritten Achse verschiebbar ist. Die Fixierung des Anschlaglineals kann manuell, pneumatisch oder hydraulisch erfolgen.

Darüber hinaus kann ein Längsanschlag derart an den Queranschlag koppelbar sein, dass bei einer Verschiebung des Queranschlags entlang oder parallel zur dritten Achse der Längsanschlag seine absolute Position beibehält. Damit kann vorzugsweise der Abstand zwischen der Tischplatte und dem Längsanschlag bei der Verschiebung des Queranschlags entlang oder parallel zur dritten Achse konstant gehalten werden. Der Längsanschlag kann maschinengesteuert und/oder manuell verschiebbarsein. Der Längsanschlag kann mittels eines Riemenantriebs angetrieben werden.

Vorzugsweise weist die Werkzeugmaschine eine Aufstellfläche von 1 m² bis 5 m², vorzugsweise von 2 m² bis 3 m², auf. Aufgrund dieser geringen Aufstellfläche kann die Werkzeugmaschine insbesondere für den Einsatz in kleinen bis mittleren Schreinereien und Werkstätten geeignet sein.

In einer Weiterbildung der Erfindung weist die Werkzeugmaschine einen verschiebbar angeordneten automatischen Werkzeugwechsler auf. Damit können die Flexibilität und die Produktivität der Werkzeugmaschine gesteigert werden. Bevorzugt weist der Werkzeugwechsler vier Werkzeugplätze auf. Besonders bevorzugt ist der Werkzeugwechsler unterhalb des Maschinentischs angeordnet.

Insbesondere zur weiteren Steigerung der Flexibilität und der Produktivität, kann die Werkzeugmaschine eine Vorschubeinrichtung zum automatischen Verschieben des Werkstücks aufweisen. Die Vorschubeinrichtung kann mittels der Steuerungseinheit bedienbar sein.

Ein Ausführungsbeispiel der Erfindung wird anhand der nachfolgenden Figuren erläutert. Es zeigt:
- Figur 1: eine erste perspektivische Ansicht eines ersten Ausführungsbeispiels einer Werkzeugmaschine bei einem Tischwinkel von 90°,
- Figur 2: eine zweite perspektivische Ansicht des in Fig. 1 gezeigten Ausführungsbeispiels bei einem Tischwinkel von 90°,
- Figur 3: eine dritte perspektivische Ansicht des in Fig. 1 gezeigten Ausführungsbeispiels bei einem Tischwinkel von 180°,
- Figur 4: eine vierte perspektivische Ansicht des in Fig. 1 gezeigten Ausführungsbeispiels bei einem Tischwinkel von 180°,
- Figur 5a: eine senkrecht zur ersten Achse angeordnete Schnittansicht des in Fig. 1 gezeigten Ausführungsbeispiels bei einem Tischwinkel von 90°,
- Figur 5b: eine senkrecht zur ersten Achse angeordnete Schnittansicht des in Fig. 1 gezeigten Ausführungsbeispiels bei einem Tischwinkel von 180°,
- Figur 6: eine erste senkrecht zur ersten Achse angeordnete Seitenansicht des in Fig. 1 gezeigten Ausführungsbeispiels bei einem Tischwinkel von 180°,
- Figur 7: eine zweite senkrecht zur ersten Achse angeordnete Seitenansicht des in Fig. 1 gezeigten Ausführungsbeispiels bei einem Tischwinkel von 90°,
- Figur 8: eine erste perspektivische Ansicht eines zweiten Ausführungsbeispiels einer Werkzeugmaschine,
- Figur 9: eine zweite perspektivische Ansicht des in Fig. 8 gezeigten Ausführungsbeispiels.

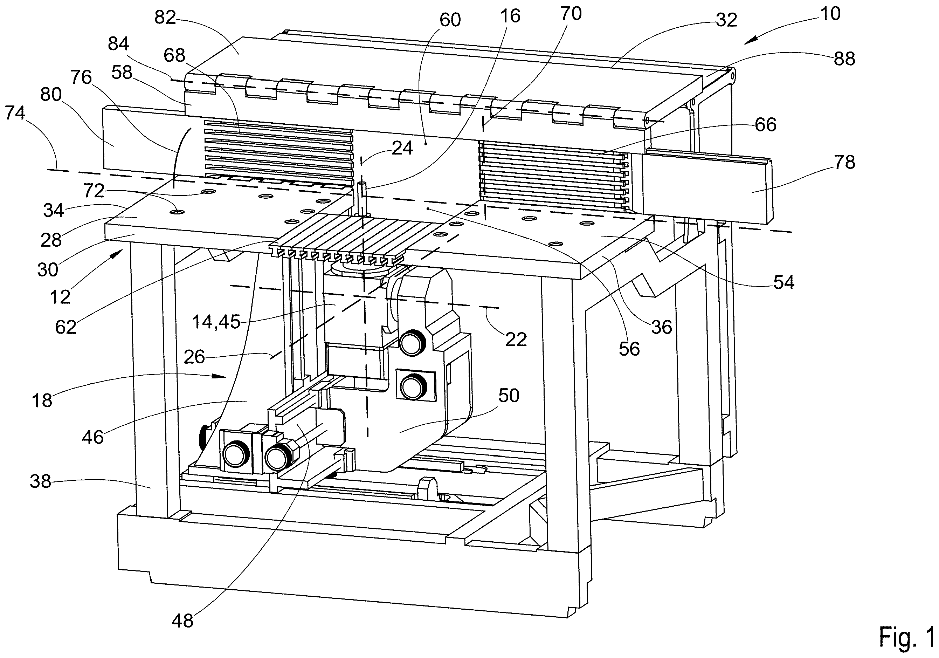

Die Figuren 1 bis 9 zeigen verschiedene Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Fig. 1 zeigt ein erstes Ausführungsbeispiel einer Werkzeugmaschine 10 zur Bearbeitung eines Werkstücks aus Holz, mit einem Maschinentisch 12 zur Auflage des Werkstücks und einer Werkzeugaufnahme 14 zur Aufnahme eines Werkzeugs 16. Die Werkzeugaufnahme 14 ist an einer unter dem Maschinentisch 12 angeordneten Verstellvorrichtung 18 gelagert. Die Werkzeugaufnahme 14 ist mittels der Verstellvorrichtung 18 relativ zum Maschinentisch 12 entlang einer horizontal verlaufenden ersten Achse 22, entlang einer vertikal verlaufenden zweiten Achse 24 und entlang einer senkrecht zur ersten Achse und zweiten Achse 24 verlaufenden dritten Achse 26 translatorisch bewegbar sowie um die erste Achse 22 rotatorisch bewegbar.

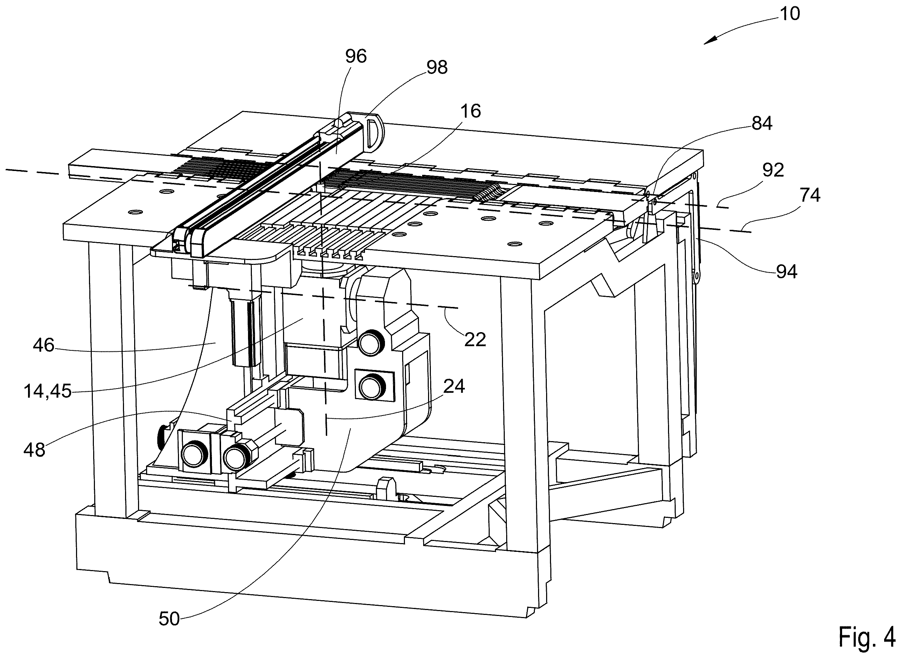

Der Maschinentisch 12 weist eine Tischplatte 28 mit einer Vorderseite 30, einer Rückseite 32, einer linken Seite 34 und einer rechten Seite 36 auf. Wie insbesondere in Fig. 4 erkennbar ist, ist die Tischplatte vorzugsweise derart auf einem Gestell 38 der Werkzeugmaschine 10 gelagert, dass die Vorderseite 30 und die Rückseite 32 parallel zu der ersten Achse 22 ausgerichtet sind, und die rechte Seite 36 und die linke Seite 34 parallel zu der dritten Achse 26 ausgerichtet sind.

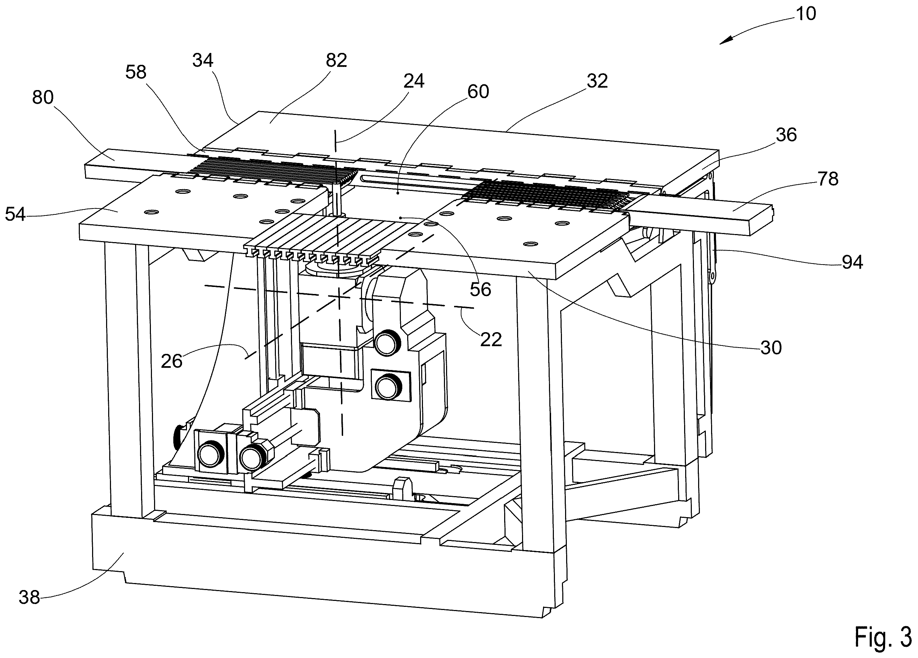

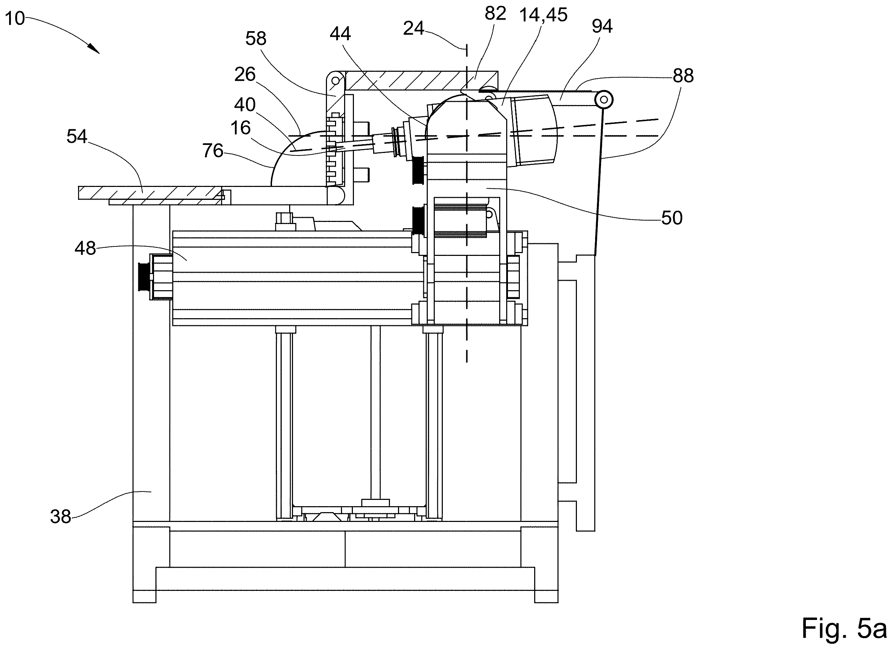

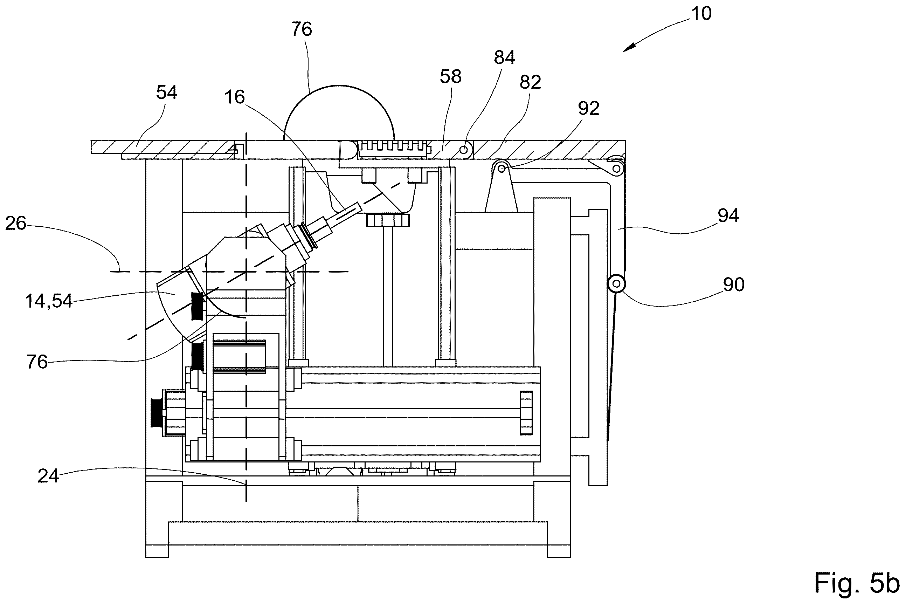

Wie insbesondere in den Fig. 5a und 5b gezeigt, weist die Werkzeugaufnahme 14 eine Werkzeuglängsachse 40 auf, entlang derer das Werkzeug 16 in der Werkzeugaufnahme 14 angeordnet wird. Die Werkzeuglängsachse 40 schließt mit der zweiten Achse 24 einen Werkzeugwinkel 44 ein. Die Werkzeugaufnahme 14 ist derart an der Verstellvorrichtung 18 gelagert, dass der Werkzeugwinkel 44 in einem Bereich von -60° bis +95° einstellbar ist. In der in Fig. 5a gezeigten Ansicht beträgt der Werkzeugwinkel 44 +95°, in der in Fig. 5b gezeigten Ansicht beträgt der Werkzeugwinkel 44 -60°. In den in Fig. 1-4, 6 und 7 gezeigten Ansichten beträgt der Werkzeugwinkel 44 0°. Die Werkzeuglängsachse 40 ist dabei derart entlang der zweiten Achse 24 ausgerichtet, dass das von der Werkzeugaufnahme 14 aufgenommene Werkzeug 16 nach oben zeigt. Wie beispielsweise an Fig. 3 nachvollzogen werden kann, kann von der linken Seite 34 aus gesehen der Werkzeugwinkel 44 durch Schwenken der Werkzeugaufnahme 14 im Uhrzeigersinn vergrößert und durch Schwenken gegen den Uhrzeigersinn entsprechend verkleinert werden.

Die Werkzeugaufnahme 14 umfasst eine angetriebene Spindel 45, die das Werkzeug 16 aufnimmt. Die Rotationsachse der Spindel 45 stimmt mit der Werkzeuglängsachse 40 überein.

Die in den Fig. 1 bis 4 dargestellten Ansichten zeigen, dass die Verstellvorrichtung 18 einen gegenüber dem Maschinentisch 12 entlang der ersten Achse 22 verschiebbaren Träger 46 aufweist, an dem eine Traverse 48 entlang der zweiten Achse 24 verschiebbar angeordnet ist. An der Traverse 48 ist ein Schlitten 50 entlang der dritten Achse 26 verschiebbar angeordnet. An dem Schlitten 50 ist die Werkzeugaufnahme 14 um die erste Achse 22 drehbar angeordnet. Damit kann die Werkzeugaufnahme 14 mittels des Trägers 46 entsprechend der Benennung der Seiten der Tischplatte 28 von links nach rechts, mittels der Traverse 48 von unten nach oben und mittels des Schlittens 50 von vorne nach hinten sowie entsprechend entgegengesetzt relativ zum Maschinentisch 12 bewegt werden. Der Träger 46 ist an dem Gestell 38 gelagert. Dieser Aufbau der Verstellvorrichtung 18, insbesondere die Anordnung der Werkzeugaufnahme 14, ermöglicht es, den zur Verfügung stehenden Raum unter dem Maschinentisch 12 weitestgehend für Verfahrwege entlang der ersten Achse 22, der zweiten Achse 24 und dritten Achse 26 zu nutzen.

Insbesondere aus den Fig. 1 bis 4 ist erkennbar, dass der Maschinentisch 12 ein erstes Tischelement 54 mit einer ersten Arbeitsöffnung 56 und ein zweites Tischelement 58 mit einer zweiten Arbeitsöffnung 60 aufweist, wobei das zweite Tischelement 58 derart an dem ersten Tischelement 54 angeordnet ist, dass die erste Arbeitsöffnung 56 und die zweite Arbeitsöffnung 60 derart aneinander angrenzen, dass sie eine durchgehende Öffnung bilden. Die erste Arbeitsöffnung 56 und die zweite Arbeitsöffnung 60 ermöglichen die Durchführung des Werkzeugs 16.

Die erste Arbeitsöffnung 56 ist mithilfe mehrerer Schiebelamellen 62 zumindest teilweise verschließbar. Der Maschinentisch 12 weist an der Oberseite des ersten Tischelements 54 Schiebenuten 64 auf, die parallel zu der dritten Achse 26 angeordnet sind und in denen mehrere der Schiebelamellen 62 einzeln verschiebbar und festklemmbar angeordnet sind. Die Schiebenuten 64 sind als T-Nuten nach DIN 650 ausgebildet. Das Entnehmen einer oder mehrerer Schiebelamellen 62 hat keinen Einfluss auf die Klemmung der übrigen Lamellen.

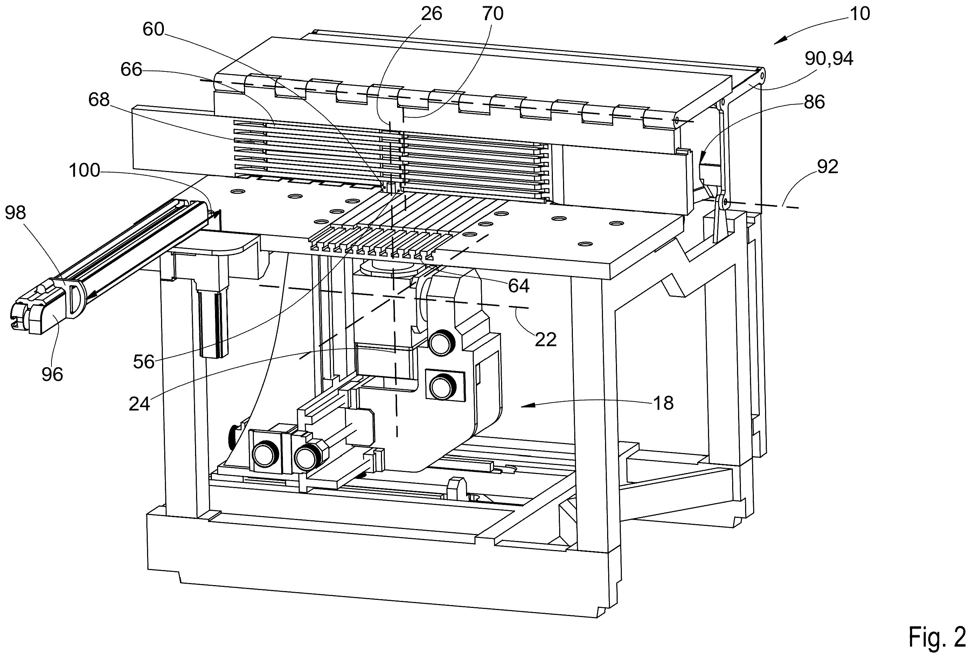

Die zweite Arbeitsöffnung 60 ist mithilfe mehrerer Klapplamellen 66 teilweise verschließbar. Das zweite Tischelement 58 weist mehrere Klappnuten 68 auf, in die die Klapplamellen 66 einzeln eingeklappt werden können. Die Klapplamellen 66 werden um eine in der Tischplatte 28 angeordnete Klappachse 70 geklappt, die neben der zweiten Arbeitsöffnung 60 angeordnet ist. Die Klappnuten 68 verlaufen an der Oberseite des zweiten Tischelements 58 senkrecht zur Klappachse 70 und sind parallel zu der ersten Achse 22 angeordnet. In den in Fig. 1, 3, 8 und 9 gezeigten Darstellungen sind die erste Arbeitsöffnung 56 und die zweite Arbeitsöffnung 60 vollständig geöffnet. In Fig. 2 und 4 begrenzen die Schiebelamellen 62 die erste Arbeitsöffnung 56 und die Klapplamellen 66 die zweite Arbeitsöffnung 60 soweit, dass nurmehr eine kleine Öffnung zur Durchführung des Werkzeugs 16 verbleibt.

Der Maschinentisch 12 weist im ersten Tischelement 54 außerdem Aufnahmebohrungen 72 zur Anordnung von mechanischen und/oder pneumatischen Spannmitteln auf.

Das zweite Tischelement 58 ist derart um eine parallel zur oder entlang der ersten Achse 22 verlaufenden ersten Schwenkachse 74 schwenkbar an dem ersten Tischelement 54 angeordnet, dass es mit dem ersten Tischelement 54 einen Tischwinkel 76 einschließt. Der Tischwinkel 76 kann dabei im Bereich von 90° bis 180° stufenlos eingestellt werden. Ist der Tischwinkel 76 gleich 180°, liegen das erste Tischelement 54 und das zweite Tischelement 58 in derselben Ebene. Entsprechende Darstellungen finden sich in den Fig. 3, 4, 5b und 6. Bei einem Tischwinkel von kleiner als 180°, insbesondere wie in den Fig. 1, 2, 5a, und 7-9 gezeigt bei einem Tischwinkel von 90°, kann das zweite Tischelement 58 als Anschlag fungieren, der parallel zu der ersten Achse 22 angeordnet ist.

Wie beispielsweise in Fig. 1 dargestellt, weist das zweite Tischelement 58 eine Einlaufbacke 78 und eine Auslaufbacke 80 auf, die entlang der oder parallel zur ersten Achse 22 verschiebbar angeordnet sind. Dabei ist die zweite Arbeitsöffnung 60 zwischen der Einlaufbacke 78 und der Auslaufbacke 80 angeordnet. Außerdem sind die Klapplamellen 66 an der Einlaufbacke 78 angeordnet. Die Auslaufbacke 80 weist die entsprechenden Klappnuten 68 auf. Die Größe der zweiten Arbeitsöffnung 60 durch Verschieben der Einlaufbacke 78 und der Auslaufbacke 80 verändert werden.

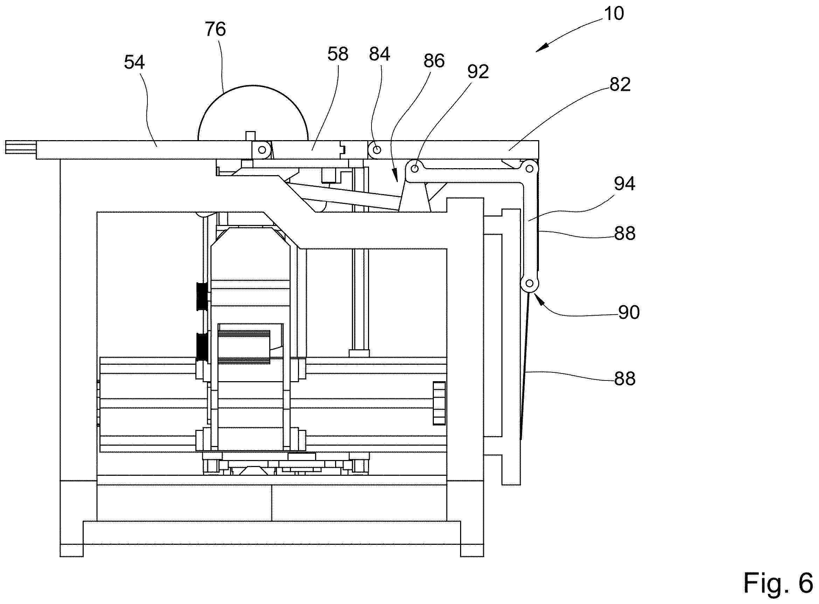

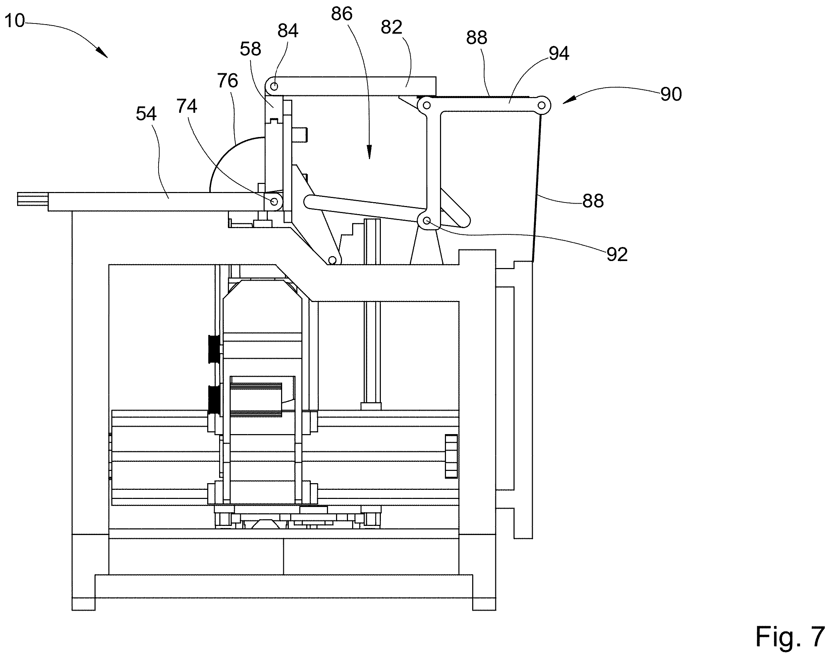

Der Maschinentisch 12 weist ein drittes Tischelement 82 auf, das um eine parallel zur ersten Achse 22 verlaufende zweite Schwenkachse 84 schwenkbar an dem zweiten Tischelement 58 angeordnet ist, wobei das dritte Tischelement 82 stets parallel zu dem ersten Tischelement 54 ausgerichtet ist. Beträgt der Tischwinkel 76, wie in den Fig. 3, 4, 5b und 6 dargestellt, 180°, vergrößert das dritte Tischelement 82 die Auflagefläche für das Werkstück. Ist der Tischwinkel 76, wie in den Fig. 1, 2, 5a, und 7-9 dargestellt, kleiner als 180°, fungiert das dritte Tischelement 82 hinsichtlich des darunterliegenden Maschinenteils als Schutzeinrichtung und kann außerdem als Ablagefläche dienen. Das dritte Tischelement 82 wird mittels eines Hebelmechanismus 86, der insbesondere in Fig. 6 und 7 dargestellt ist, parallel zu dem ersten Tischelement 22 gehalten.

Wie ebenfalls in den Fig. 6 und 7, aber beispielsweise auch in den Fig. 2, 5a und 5b zu sehen ist, weist die Werkzeugmaschine 10 eine an das dritte Tischelement 82 angrenzende Abdeckung 88 auf, die mittels einer Abdeckmechanik 90 um die erste Achse 22 oder um eine parallel hierzu verlaufende dritte Schwenkachse 92 in Abhängigkeit des Tischwinkels 76 schwenkbar ist. Damit kann die Verkürzung des Maschinentischs 12 bezüglich der dritten Achse 26, die auftritt, wenn der Tischwinkel 76 kleiner als 180° ist, kompensiert werden. Die Abdeckmechanik 90 ist derart mit dem Hebelmechanismus 86 gekoppelt, dass die Abdeckmechanik 90 einen Ausleger 94 des Hebelmechanismus 86 umfasst.

Wie in den Fig. 2, 4, 8 und 9 gezeigt, kann am Maschinentisch 12 ein Queranschlag 96 angeordnet sein, der entlang der oder parallel zur ersten Achse 22 und entlang der oder parallel zur dritten Achse 26 manuell und maschinengesteuert verschiebbar und fixierbar ist. Der Queranschlag 96 kann insbesondere von der Vorderseite 30 der Tischplatte 28 her angeordnet werden.

Darüber hinaus kann ein Längsanschlag 98 derart an den Queranschlag 96 gekoppelt werden, dass bei einer Verschiebung des Queranschlags 96 entlang oder parallel zur dritten Achse 26 der Längsanschlag 98 seine absolute Position beibehält. Damit kann beispielsweise ein Abstand 100 zwischen der Tischplatte 28 und dem Längsanschlag 98 bei der Verschiebung des Queranschlags 96 entlang oder parallel zur dritten Achse 26 konstant gehalten werden (siehe insbesondere Fig. 2). Der Längsanschlag ist maschinengesteuert und manuell verschiebbar.

Die Werkzeugmaschine 10 weist eine Aufstellfläche von 1 m² bis 5 m², vorzugsweise von 2 m² bis 3 m², auf.

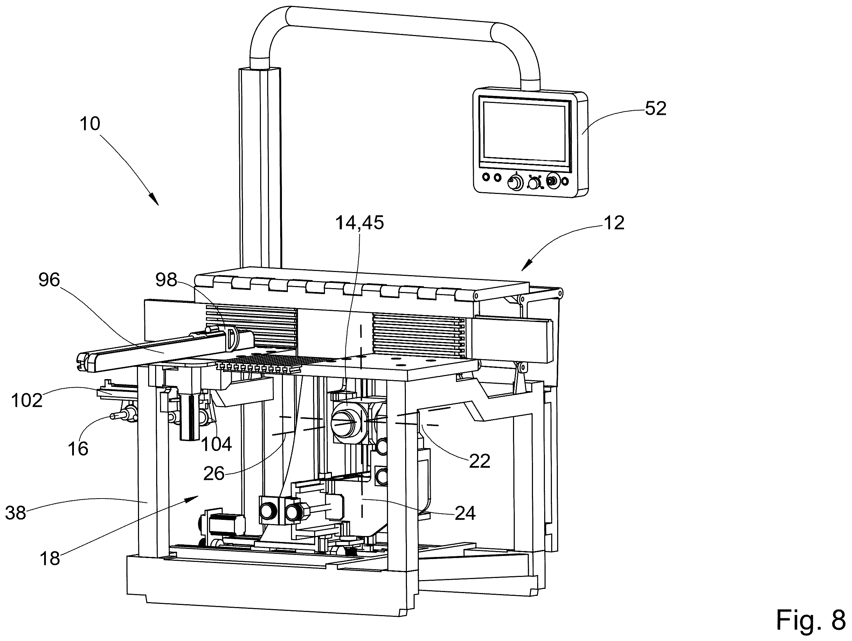

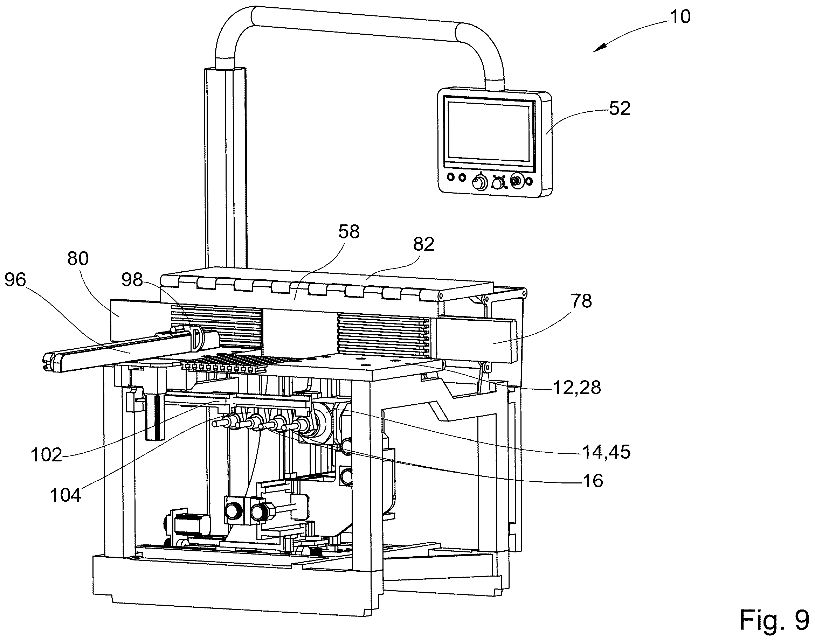

Das in Fig. 8 und 9 dargestellte zweite Ausführungsbeispiel unterscheidet sich von dem in den Fig. 1-7 gezeigten ersten Ausführungsbeispiel darin, dass es zusätzlich eine als CNC-Steuerungseinheit ausgebildeten Steuerungseinheit 52 sowie einen verschiebbar angeordneten automatischen Werkzeugwechsler 102 aufweist.

Mithilfe der Steuerungseinheit 52 ist die Verstellvorrichtung 18 während eines Bearbeitungsvorgangs bewegbar. Damit kann eine simultane mehrachsige Bewegung der Werkzeugaufnahme 14 realisiert werden. Insbesondere kann damit die Bewegung der Werkzeugaufnahme 14 entlang einer vorherbestimmten Trajektorie mit laufender Spindel 45 ermöglicht werden. Damit kann die Bearbeitung derart erfolgen, dass das Werkstück fixiert ist und das Werkzeug 16 die Bearbeitung ausführt. Alternativ kann das Werkzeug 16 in einer bestimmten Positionierung gehalten werden, sodass das Werkstück gegenüber dem Werkzeug 16 bewegt werden kann. Das maschinengesteuerte Verschieben und Fixieren des Queranschlags 96 und des Längsanschlags 98 erfolgt ebenfalls mithilfe der Steuerungseinheit 52.

Der Werkzeugwechsler 102 weist vier Werkzeugplätze 104 auf. Der Werkzeugwechsler 102 ist unterhalb des Maschinentischs 12 angeordnet.

### Bezugszeichenliste

- 10: Werkzeugmaschine
- 12: Maschinentisch
- 14: Werkzeugaufnahme
- 16: Werkzeug
- 18: Verstellvorrichtung
- 22: erste Achse
- 24: zweite Achse
- 26: dritte Achse
- 28: Tischplatte
- 30: Vorderseite
- 32: Rückseite
- 34: linke Seite
- 36: rechte Seite
- 38: Gestell
- 40: Werkzeuglängsachse
- 44: Werkzeugwinkel
- 45: Spindel
- 46: Träger
- 48: Traverse
- 50: Schlitten
- 52: Steuerungseinheit
- 54: erstes Tischelement
- 56: erste Arbeitsöffnung
- 58: zweites Tischelement
- 60: zweite Arbeitsöffnung
- 62: Schiebelamelle
- 64: Schiebenut
- 66: Klapplamelle
- 68: Klappnut
- 70: Klappachse
- 72: Aufnahmebohrung
- 74: erste Schwenkachse
- 76: Tischwinkel
- 78: Einlaufbacke
- 80: Auslaufbacke
- 82: drittes Tischelement
- 84: zweite Schwenkachse
- 86: Hebelmechanismus
- 88: Abdeckung
- 90: Abdeckmechanik
- 92: dritte Schwenkachse
- 94: Ausleger
- 96: Queranschlag
- 98: Längsanschlag
- 100: Abstand
- 102: Werkzeugwechsler
- 104: Werkzeugplatz

## Patentansprüche

1. Werkzeugmaschine (10) zur Bearbeitung eines Werkstücks aus Holz, mit einem Maschinentisch (12) zur Auflage des Werkstücks und mit einer Werkzeugaufnahme (14) zur Aufnahme eines Werkzeugs (16), wobei
- die Werkzeugaufnahme (14) an einer unter dem Maschinentisch (12) angeordneten Verstellvorrichtung (18) gelagert ist,
- der Maschinentisch (12) eine Arbeitsöffnung (56, 60) zur Durchführung des Werkzeugs (16) aufweist, und
- die Werkzeugaufnahme (14) mittels der Verstellvorrichtung (18) relativ zum Maschinentisch (12)
o entlang einer horizontal verlaufenden ersten Achse (22),
o entlang einer vertikal verlaufenden zweiten Achse (24) und
o entlang einer senkrecht zur ersten Achse (22) und zweiten Achse (24) verlaufenden dritten Achse (26) translatorisch bewegbar und
o um die erste Achse (22) rotatorisch bewegbar ist,
**dadurch gekennzeichnet, dass** der Maschinentisch (12) ein erstes Tischelement (54) mit einer ersten Arbeitsöffnung (56) und ein zweites Tischelement (58) mit einer zweiten Arbeitsöffnung (60) aufweist, wobei das zweite Tischelement (58) derart an dem ersten Tischelement (54) angeordnet ist, dass die erste Arbeitsöffnung (56) und die zweite Arbeitsöffnung (60) derart aneinander angrenzen, dass sie eine durchgehende Öffnung bilden.

2. Werkzeugmaschine nach Anspruch 1,
**dadurch gekennzeichnet, dass** die Verstellvorrichtung (18)
- einen gegenüber dem Maschinentisch (12) entlang der ersten Achse (22) verschiebbaren Träger (46) aufweist, an dem eine Traverse (48) entlang der zweiten Achse (24) verschiebbar angeordnet ist, wobei
- an der Traverse (48) ein Schlitten (50) entlang der dritten Achse (26) verschiebbar angeordnet ist, und
- an dem Schlitten (50) die Werkzeugaufnahme (14) um die erste Achse (22) drehbar angeordnet ist.

3. Werkzeugmaschine nach einem der vorhergehenden Ansprüche,
**dadurch gekennzeichnet, dass** die Werkzeugaufnahme (14) eine angetriebene Spindel (45), insbesondere zur Aufnahme eines Fräswerkzeugs, umfasst.

4. Werkzeugmaschine nach einem der vorhergehenden Ansprüche,
**dadurch gekennzeichnet, dass** die Verstellvorrichtung (18) während eines Bearbeitungsvorgangs mit einer Steuerungseinheit (52) bewegbar ist.

5. Werkzeugmaschine nach einem der vorhergehenden Ansprüche,
**dadurch gekennzeichnet, dass** die Arbeitsöffnung (56, 60) mittels mindestens einer verschiebbaren Schiebelamelle (62) oder klappbaren Klapplamelle (66) zumindest teilweise verschließbar ist.

6. Werkzeugmaschine nach einem der vorhergehenden Ansprüche,
**dadurch gekennzeichnet, dass** das zweite Tischelement (58) derart um eine parallel zur oder entlang der ersten Achse (22) verlaufenden ersten Schwenkachse (74) schwenkbar an dem ersten Tischelement (54) angeordnet ist, dass es mit dem ersten Tischelement (54) einen Tischwinkel (76) einschließt.

7. Werkzeugmaschine nach Anspruch 6,
**dadurch gekennzeichnet, dass** der Tischwinkel (76) im Bereich von 90° bis 180° liegt.

8. Werkzeugmaschine nach einem der vorhergehenden Ansprüche,
**dadurch gekennzeichnet, dass** das zweite Tischelement (58) eine Einlaufbacke (78) und eine Auslaufbacke (80) aufweist, die entlang der oder parallel zur ersten Achse (22) verschiebbar angeordnet sind.

9. Werkzeugmaschine nach einem der vorhergehenden Ansprüche,
**dadurch gekennzeichnet, dass** der Maschinentisch (12) ein drittes Tischelement (82) aufweist, das um die erste Achse (22) oder um eine parallel hierzu verlaufende zweite Schwenkachse (84) schwenkbar an dem zweiten Tischelement (58) angeordnet ist, wobei das dritte Tischelement (82) stets parallel zu dem ersten Tischelement (54) ausgerichtet ist.

10. Werkzeugmaschine nach Anspruch 9,
**dadurch gekennzeichnet, dass** die Werkzeugmaschine (10) eine an das dritte Tischelement (82) angrenzende Abdeckung (88) aufweist, die mittels einer Abdeckmechanik (90) um die erste Achse (22) oder um eine parallel zu der ersten Achse (22) verlaufende dritte Schwenkachse (92) in Abhängigkeit des Tischwinkels (76) schwenkbar ist.

11. Werkzeugmaschine nach einem der vorhergehenden Ansprüche,
**dadurch gekennzeichnet, dass** die Werkzeugmaschine (10) einen an dem Maschinentisch (12) anordenbaren Queranschlag (96) aufweist, der entlang der oder parallel zur ersten Achse (22) und entlang der oder parallel zur dritten Achse (26) manuell und/oder maschinengesteuert verschiebbar und fixierbar ist.

12. Werkzeugmaschine nach Anspruch 11,
**dadurch gekennzeichnet, dass** ein Längsanschlag (98) derart an den Queranschlag (96) koppelbar ist, dass bei einer Verschiebung des Queranschlags (96) entlang oder parallel zur dritten Achse (26) der Längsanschlag (98) seine absolute Position beibehält.

13. Werkzeugmaschine nach einem der vorhergehenden Ansprüche,
**dadurch gekennzeichnet, dass** die Werkzeugmaschine (10) eine Aufstellfläche von 1 m² bis 5 m², vorzugsweise von 2 m² bis 3 m², aufweist.

14. Werkzeugmaschine nach einem der vorhergehenden Ansprüche,
**dadurch gekennzeichnet, dass** die Werkzeugmaschine (10) einen verschiebbar angeordneten automatischen Werkzeugwechsler (102) aufweist.

## Claims

1. Machine tool (10) for machining a workpiece made of wood, comprising a machine table (12) for resting the workpiece, and comprising a tool receptacle (14) for receiving a tool (16), wherein
- the tool receptacle (14) is mounted on an adjustment device (18) arranged under the machine table (12),
- the machine table (12) comprises a work opening (56, 60) for feed-through of the tool (16), and
- the tool receptacle (14) is movable in translation, by means of the adjustment device (18), relative to the machine table (12),
∘ along a horizontally extending first axis (22),
∘ along a vertically extending second axis (24), and
∘ along a third axis (26) extending perpendicularly to the first axis (22) and second axis (24), and
∘ is rotationally movable about the first axis (22),
**characterised in that** the machine table (12) comprises a first table element (54) having a first work opening (56) and a second table element (58) having a second work opening (60), wherein the second table element (58) is arranged on the first table element (54) in such a way that the first work opening (56) and the second work opening (60) adjoin one another in such a way that they form a continuous opening.

2. Machine tool according to claim 1,
**characterised in that** the adjustment device (18)
- comprises a carrier (46) which is displaceable relative to the machine table (12), along the first axis (22), and on which a crossmember (48) is arranged so as to be displaceable along the second axis (24), wherein
- a carriage (50) is arranged on the crossmember (48) so as to be displaceable along the third axis (26), and
- the tool receptacle (14) is arranged on the carriage (50) so as to be rotatable about the first axis (22).

3. Machine tool according to either of the preceding claims,
**characterised in that** the tool receptacle (14) comprises a driven spindle (45), in particular for receiving a milling tool.

4. Machine tool according to any of the preceding claims,
**characterised in that** the adjustment device (18) is movable by means of a control unit (52) during a machining process.

5. Machine tool according to any of the preceding claims,
**characterised in that** the work opening (56, 60) can be closed, at least in part, by means of at least one displaceable sliding lamella (62) or foldable folding lamella (66).

6. Machine tool according to any of the preceding claims,
**characterised in that** the second table element (56) is arranged on the first table element (54) so as to be pivotable about a first pivot axis (74) extending in parallel with or along the first axis (22), such that said second table element encloses, with the first table element (54), a table angle (76).

7. Machine tool according to claim 6,
**characterised in that** the table angle (76) is in the range from 90° to 180°.

8. Machine tool according to any of the preceding claims,
**characterised in that** the second table element (58) comprises an inlet jaw (78) and an outlet jaw (80), which are arranged so as to be displaceable along or in parallel with the first axis (22).

9. Machine tool according to any of the preceding claims,
**characterised in that** the machine table (12) comprise a third table element (82) which is arranged on the second table element (58) so as to be pivotable about the first axis (22) or about a second pivot axis (84) extending in parallel with said first axis, wherein the third table element (82) is always aligned in parallel with the first table element (54).

10. Machine tool according to claim 9,
**characterised in that** the machine tool (10) comprise a cover (88) which adjoins the third table element (82) and which is pivotable, by means of cover mechanics (90), about the first axis (22) or about a third pivot axis (92) extending in parallel with the first axis (22), depending on the table angle (76).

11. Machine tool according to any of the preceding claims,
**characterised in that** the machine tool (10) comprises a transverse stop (96) which can be arranged on the machine table (12) and which can be displaced and fixed manually and/or in a machine-controlled manner along or in parallel with the first axis (22) and along or in parallel with the third axis (26).

12. Machine tool according to claim 11,
**characterised in that** a longitudinal stop (98) can be coupled to the transverse stop (96) in such a way that in the case of a displacement of the transverse stop (96) along or in parallel with the third axis (26) the longitudinal stop (98) maintains its absolute position.

13. Machine tool according to any of the preceding claims,
**characterised in that** the machine tool (10) has a placement surface of from 1 m² to 5 m², preferably from 2 m² to 3 m².

14. Machine tool according to any of the preceding claims,
**characterised in that** the machine tool (10) comprises a displaceably arranged automatic tool changer (102).

## Revendications

1. Machine-outil (10) d'usinage d'une pièce en bois comprenant une table (12) de machine pour l'appui de la pièce et comprenant un logement (14) d'outil pour le logement d'un outil (16), dans laquelle
- le logement (14) d'outil est mis sur un dispositif (18) de déplacement monté sous la table (12) de machine,
- la table (12) de machine a une ouverture (56, 60) de travail pour le passage de l'outil (16), et
- le logement (14) d'outil peut au moyen du dispositif (18) de déplacement par rapport à la table (12) de machine
∘ être déplacé en translation suivant un premier axe (22) s'étendant horizontalement,
∘ suivant un deuxième axe (24) s'étendant verticalement et
∘ suivant un troisième axe (26) s'étendant perpendiculairement au premier axe (22) et au deuxième axe (24) et
∘ être déplacé en rotation autour du premier axe (22),
**caractérisée en ce que** la table (12) de machine a un premier élément (54) de table ayant une première ouverture (56) de travail et un deuxième élément (58) de table ayant une deuxième ouverture (60) de travail, dans laquelle le deuxième élément (58) de table est monté sur le premier élément (54) de table de manière à ce que la première ouverture (56) de travail et la deuxième ouverture (60) de travail soient voisines l'une de l'autre de façon à former une ouverture continue.

2. Machine-outil suivant la revendication 1,
**caractérisée en ce que** le dispositif (18) de déplacement
- a, coulissant par rapport à la table (12) de machine suivant le premier axe (22), un support (46), sur lequel une traverse (48) est montée coulissante suivant le deuxième axe (24), dans laquelle
- sur la traverse (48), un chariot (50) est monté coulissant suivant le troisième axe (26), et
- sur le chariot (50), le logement (14) d'outil est monté tournant autour du premier axe (22).

3. Machine-outil suivant l'une des revendications précédentes,
**caractérisée en ce que** le logement (14) d'outil comprend une broche (45) entraînée, en particulier de réception d'un outil de fraisage.

4. Machine-outil suivant l'une des revendications précédentes,
**caractérisée en ce que** le dispositif (18) de déplacement peut, pendant une opération d'usinage, être déplacé par une unité (52) de commande.

5. Machine-outil suivant l'une des revendications précédentes,
**caractérisée en ce que** l'ouverture (56, 60) de travail peut, au moyen d'au moins une lamelle (62) coulissante ou d'une lamelle (66) rabattable, être fermée au moins en partie.

6. Machine-outil suivant l'une des revendications précédentes,
**caractérisée en ce que** le deuxième élément (58) de table est monté pivotant sur le premier élément (54) de table autour d'un premier axe (74) de pivotement s'étendant parallèlement ou suivant le premier axe (22), de manière à faire avec le premier élément (54) de table un angle (76) de table.

7. Machine-outil suivant la revendication 6,
**caractérisée en ce que** l'angle (76) de table est dans la plage de 90° à 180°.

8. Machine-outil suivant l'une des revendications précédentes,
**caractérisée en ce que** le deuxième élément (58) de table a une joue (78) d'entrée et une joue (80) de sortie, qui sont montées coulissantes suivant le premier axe (22) ou parallèlement à celui-ci.

9. Machine-outil suivant l'une des revendications précédentes,
**caractérisée en ce que** la table (12) de machine a un troisième élément (82) de table, qui est monté pivotant sur le deuxième élément (58) de table autour du premier axe (22) ou d'un deuxième axe (84) de pivotement s'y étendant parallèlement, dans laquelle le troisième élément (82) de table est dirigé toujours parallèlement au premier élément (54) de table.

10. Machine-outil suivant la revendication 9,
**caractérisée en ce que** la machine-outil (10) a un recouvrement (88), qui est contigu au troisième élément (82) de table et qui, au moyen d'une mécanique (90) de recouvrement, de pivoter en fonction de l'angle (76) de la table autour du premier axe (22) ou autour d'un troisième axe (92) de pivotement s'étendant parallèlement au premier axe (22).

11. Machine-outil suivant l'une des revendications précédentes,
**caractérisée en ce que** la machine-outil (10) a, pouvant être montée sur la table (12) de machine, une butée (96) transversale qui, manuellement, et/ou commandée par machine, peut coulisser et être immobilisée le long du ou parallèlement au premier axe (22) et le long du ou parallèlement au troisième axe (26).

12. Machine-outil suivant la revendication 11,
**caractérisée en ce qu'**une butée (98) longitudinale peut être accouplée à la butée (96) transversale de manière à ce que, lors d'un déplacement de la butée (96) transversale, le long ou parallèlement au troisième axe (26), la butée (98) longitudinale conserve sa position absolue.

13. Machine-outil suivant l'une des revendications précédentes,
**caractérisée en ce que** la machine-outil (10) a une surface d'implantation de 1 m² à 5 m², de préférence de 2 m² à 3 m².

14. Machine-outil suivant l'une des revendications précédentes,
**caractérisée en ce que** la machine-outil (10) a un échangeur (102) automatique d'outil monté coulissant.
